Europäisches Patentamt

European Patent Office

Office européen des brevets

(19)

(11) Publication number: **0 359 364**
**A2**

# EUROPEAN PATENT APPLICATION

(21) Application number: **89306685.2**

(22) Date of filing: **30.06.89**

(51) Int. Cl.⁵ **G11B 23/00 , G11B 33/00**

(30) Priority: **14.09.88 US 244202**

(43) Date of publication of application:
**21.03.90 Bulletin 90/12**

(84) Designated Contracting States:
**DE FR GB IT**

(71) Applicant: **MAGNETIC PERIPHERALS INC.**
**12501 Whitewater Drive**
**Minnetonka Minnesota 55343(US)**

(72) Inventor: **Toffle, Mark August**
**7001, 24th Street West**
**St. Louis Park Minnesota 55426(US)**

(74) Representative: **Caro, William Egerton et al**
**J. MILLER & CO. Lincoln House 296-302 High**
**Holborn**
**London WC1V 7JH(GB)**

(54) **A rigid transparent disk for testing sliders and a method of forming the same.**

(57) A rigid transparent disk (17) for use in testing
the mechanical response characteristics of a slider
(14) carrying a transducer in a magnetic disk drive
comprises projections (15a) formed on the disk of a
fluorocarbon material and having a pre-selected footprint shape and size and a pre-selected projecting
height above the surrounding surface of the disk.

**Fig. 1**

EP 0 359 364 A2

# A RIGID TRANSPARENT DISK FOR TESTING SLIDERS AND A METHOD OF FORMING THE SAME

This invention relates to rigid transparent disks, for example of glass, for testing sliders and methods of forming the same.

A magnetic disk drive is, for several reasons, the most common of the mass data storage devices used in computing systems today. Those magnetic disk drives having rigid disks as storage media have relatively large capacity, a price per stored bit that is relatively low and rapid availability of the data stored. The rapid availability of the stored data is due mainly to the high rotational speed of the disk, which in turn is dependent on the use of aero-dynamically suspended sliders or flyers carrying data transducers a few micro-inches above the surface of the disk. The surface of the flyer facing the disk is designed to create aero-dynamic lift resulting from the rotation of the disk which, when the flyer is properly suspended from an arm, forces the trailing edge of the flyer to follow accurately the surface of the disk just a few micro-inches from it. The arm may be moved to shift the flyer across a portion of the radius of the disk, thereby allowing the transducer to read data previously written on the disk in a magnetic medium layer and to write data in the medium layer.

To fly reliably the flyer for the years of failure-free performance now expected for such disk drives, it is important that the disk is as flat and free from imperfections as is possible. However, since it is not possible to have disks that have totally perfect surfaces, or for that matter spindle bearings with no axial run out or vibration, the flyers themselves are suspended by gimbal mountings from flexible arms. The arm and the gimbal co-operate to allow the flyer to adjust itself to the changes in attitude of the disk surface. Thus, vertical (axial) run out of the disk surface or asperities in the disk surface will result in the flyer adjusting itself to the changing surface attitude and altitude rather than causing the flyer and disk surface to contact and possibly be damaged, i.e. "crash". Vertical disk run out refers to relatively gradual changes in the position of the disk normal to its surface. The term "asperity" in this context means a relatively localised projection on the surface of a disk over which a flyer suitable for carrying a transducer may be flown, which projection is of a height and size as to test the tolerance of the flyer and its sub-system to such defects when the flyer passes over it during normal flying operation. For the sake of convenience, the flyer, the gimbal which attaches the flyer to the arm, and the flexible arm itself, will on occasion be referred to as the SGA (slider-gimbal-arm) assembly hereinafter.

The flexible arm and the gimbal form a delicate sub-system of the disk drive for supporting the flyer. During manufacture of these parts one must be certain that the characteristics of each gimbal and the arm will permit them properly to support the flyer over the entire life of the disk drive. Consequently, it is important that samples of the sub-system are tested to make sure that their dynamic response to the various disk surface defects and conditions is satisfactory, thus ensuring that the manufacturing processes for the sub-system have not degraded. In one type of such testing the flyers are actually flown on test disks which have surface defects artificially placed on them.

In the past the desired asperities on test disks have been created by either distorting the disk surface in a pre-determined manner or by depositing a material to create a number of individual aspertities on the disk surface. The former procedure is exemplified by IBM Technical Disclosure Bulletin, Vol. 25, No. 3A, August 1982, page 1087, "Calibrated Asperity Disk" (Broome), where the asperities are created by creating convex bumps with carefully controlled height in the surface of the disk by drilling through the disk from the underside. The latter procedure is described in IBM Technical Disclosure Bulletin, Vol. 21, No. 12, May 1979, "Asperity Disk" (Blair, et al), and in IEEE Transactions on Magnetics, Vol. MAG-18, No. 6, November 1982 "A Standard Disk for Calibrating Head Disk Interference Measuring Equipment" (Mackintosh et al). The latter references suggest the use of any of a number of materials to constitute the protrusions. Among the materials mentioned are chromium, various metal carbides and tungsten, selected for resistance to wear. However, the harder of these materials can damage the flyer under test, and the softer ones have been determined not to have sufficient wear resistance. It is important that such test disks have asperities that are durable and whose characteristics can be reproduced with accuracy, so that testing over a period of time has a standardised basis which will indicate quickly when the sub-system under test is faulty. If the test disk in use is or can possibly be the source of the change in test results, no worthwhile data will be generated defining the characteristics of the sub-system and flyer under test.

It frequently is desirable to place asperities of controlled height and footprint size and shape on a transparent glass disk, so that performance of the flyer as it passes over them can be directly observed. For example, if the area is illuminated with monochromatic light, the Moire interference fringes will give a good indication of the changes in the flying height. Unfortunately, the materials usually selected to constitute the asperities adhere very poorly to glass. Accordingly, it has been difficult in the past to observe directly the dynamic response of flyers when encountering, during flying, asperities whose height and footprint dimensions are accurately controlled.

According to one aspect of the present invention, there is provided a rigid transparent disk for use in testing the mechanical response characteristics of a slider carrying a transducer in a magnetic disk drive, said disk being characterised by having projections thereon formed of a fluorocarbon material and having a pre-selected footprint shape and size and a pre-selected projecting height above the surrounding surface of the disk.

Such fluorocarbon material may be that sold under the trade name Teflon-S (trade mark). In particular, any one of the 954-200 series as described in the DuPont brochure no. E-33980 Rev. 2 is suitable when applied properly. Adhesion to glass is satisfactory when the glass surface is properly prepared, and the relative softness of the fluorocarbon material reduces damage to the slider if strikes between the slider and the projections occur during use.

It is possible to control accurately the height which the projection rises above the surrounding surface of the disk to within a micro-inch or so within a range of 0.1 to 0.3 micron (4 to 12 micro-inch) by suitably machining the projections with a burnish slider after they have been formed. Illuminating the burnish slider with mono-chromatic light while it is flying on a disk allows its flying height relative to the surrounding surface of the disk surrounding each asperity to be determined through the use of Moire fringe techniques, and the height of the asperity relative to the surrounding surface to be accurately controlled and measured.

According to another aspect of the present invention, there is provided a method of forming a disk characterised by comprising the steps of: placing a pre-selected quantity of a liquid in which is dissolved a fluorocarbon material on a pre-selected area of the surface of the disk; allowing the liquid solution of fluorocarbon material to dry; and baking the disk and the fluorocarbon material which is on it in an oven.

Typically there will be more than one area that will receive a quantity of the liquid solution. The amount of liquid solution placed on an area of the disk depends on the height of the projection desired and the area of its footprint. The temperature and length of baking time is as is specified for the fluorocarbon material involved, typically a few tens of minutes at around 150˚ C (300˚ F).

The method may include the step of over-laying at least a portion of the surface of the disk with a flat plate having at least one hole passing therethrough and applying the fluorocarbon material to a portion of the surface of the disk surrounded by the hole or holes thereby to form a projection(s). The method may also include the step of removing the flat plate from the disk, and thereafter removing a portion of the top of the projection(s).

The preferred way to control the footprint of the projection is to over-lay at least a part of the test disk surface with a flat plate having at least one hole in which the liquid solution is placed. The amount of material can be controlled by selecting the size of drop which is deposited. After drying the entire assembly, disk and flat plate, then the test disk and the fluorocarbon material is baked as specified, the flat plate being removed either before or after the baking.

To set finally the height of the projection, a burnish slider may be flown in conventional fashion on the rotating test disk over the area carrying the projections. The relatively soft fluorocarbon material machined from the tops of the projections during this step is relatively unlikely to cause damage to the disk. By selection of the burnish slider and suspension characteristics, the height of the asperities can be accurately controlled.

Accordingly, one purpose of the present invention is to provide a transparent test disk having asperities, which may be substituted for the standard recording disk used in a magnetic disk drive, and on which may be flown data transducers to observe with Moire fringe techniques their flying height performance when passing over the asperities.

Another purpose is to provide a test disk which retains its surface characteristics with very little change over long operation so as to allow a number of different transducers to be tested under identical conditions and their flying characteristics accurately compared.

Another purpose is to provide asperities on a test disk which will not damage the transducer under test when struck by the transducer.

Yet another purpose is to provide asperities which will adhere tightly to the surface of a transparent glass disk.

A further purpose is to provide a test disk with asperities of accurately calibrated height, and asperities of different heights on the same disk.

The invention is illustrated, merely by way of example, in the accompanying drawings, in which:-

Figure 1 shows a test system with a slider to be tested positioned on the surface of a rigid transparent glass disk according to the present invention;

Figure 2 is a detail of a rigid transparent glass disk according to the present invention during machining of asperities to set their height to a desired value;

Figure 3 is a plan view of a rigid transparent glass disk according to the present invention carrying asperities on its surface; and

Figure 4 is a plan view of a masking disk used in the fabrication process of a rigid transparent glass disk according to the present invention.

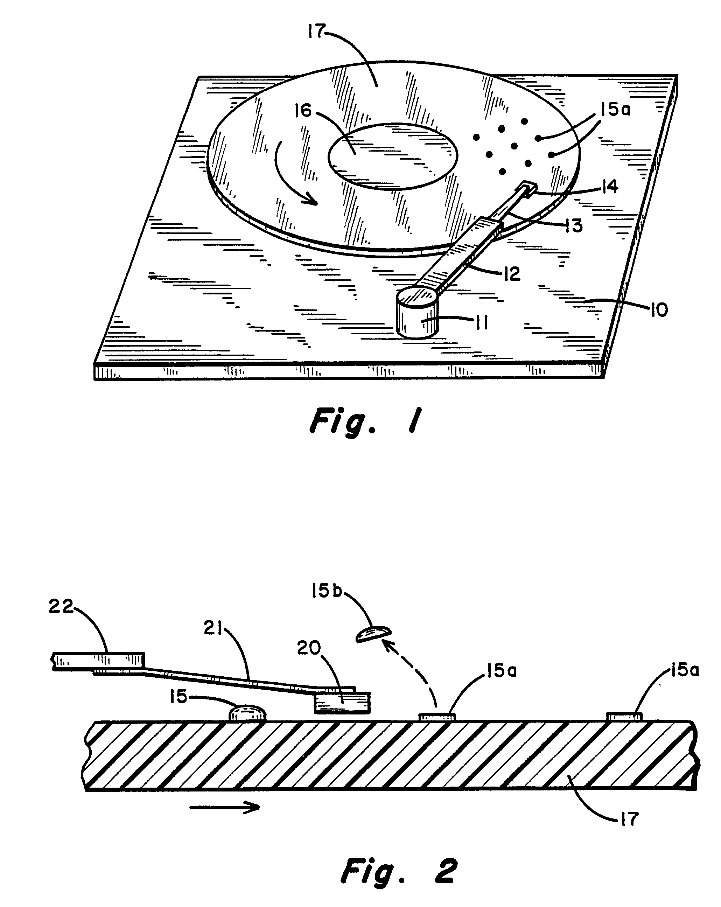

Turning first to Figure 1, there is shown, in schematic form, a test system carried on a base 10. A rigid transparent glass disk 17 according to the present invention is supported on a spindle 16 mounted for rotation on the base 10. The disk 17 has, on its top surface, individual asperities 15a positioned at convenient pre-selected radii. The asperities 15a comprise fluorocarbon material, e.g. fluorocarbon resin with modifiers, and may be of any convenient size. It has been found that circular asperities of 3.2 mm (0.125 inch) diameter seem to work well for the intended purpose and are relatively easy to fabricate. The preferred height above the surrounding surface of the disk for each asperity 15a is from 0.1 to 0.3 micron (4 to 12 micro-inch). The disk 17 is preferably made of glass so that events occurring on the top surface in the vicinity of the asperities 15a can be viewed from the bottom surface through a convenient aperture (not shown) in the base 10. The glass material of the disk 17 should be hardened or tempered by any convenient means, and chemical hardening is currently preferred. The spindle 16 is driven by a spindle motor (not shown) at a pre-selected speed similar to the normal speed of a typical disk drive spindle.

An arm support shaft 11 is mounted for rotation on the base 10, and it carries a rigid arm 12 which extends approximately parallel to the base 10 in a cantilevered fashion over the disk 17. A load spring 13 is attached to the arm 12 in a cantilevered fashion as well and extends along and approximately parallel to the top surface of the disk 17. At the end of the load spring 13, a flyer or slider 14 is attached. The slider 14, the load spring 13, and the arm 12 form an SGA assembly to be tested, so it is important that there is a simple way to mount and dismount the arm 12 from the shaft 11. A stepping motor (not shown) rotates the shaft 11 so as to shift the slider 14 to any of the radii of the disk 17 at which asperities 15a are located.

In operation, the spindle 16 rotates the disk 17 at the usual speed of a recording disk in a disk drive, causing the slider 14 to form an air bearing lubricated by a thin film of air a few micro-inches thick on the surface of the disk 17 in a way entirely familiar to that if it was operating in a conventional disk drive. By illuminating the air bearing surface (ABS) of the slider 14 with mono-chromatic light shown through the aperture in the base 10 and through the disk 17, and taking high speed photographs or video images of the Moire interference fringes formed on the ABS one can, as is well known, determine the spacing between the disk surface and the ABS. As each asperity passes under the ABS the fringe pattern will change, indicating how effectively the slider 14 can deal with the asperity. Perturbations in the flight of the slider 14 caused by passing over an asperity 15a for example can be measured by changes in the fringe pattern. If the ABS touches to comes too near the surface of the disk 17, the fringe pattern will indicate this and an appropriate change in the manufacturing process or the SGA can be made to correct the situation. One would expect that some sort of sampling technique can be used constantly to monitor SGA quality. Since the test here is nondestructive and not damaging, relatively expensive SGA assemblies which have been tested can be installed in production disk drives without increased likelihood of their failure.

The fluorocarbon material from which the asperities 15a are formed has good bonding characteristics to the glass material from which the disk 17 is made. It also has a relatively low co-efficient of friction and good wear resistance, so it maintains its geometry for a relatively long period of time, and does not damage the ABS if an asperity 15a should strike it. Because it is relatively soft, if particles are dislodged by such strikes, it is unlikely that the slider 14 will crash onto the disk 17.

One problem with forming asperities on such test disks, regardless of the type, is control of the height. Figure 2 is a detail of how this can be done on the disk of Figure 1. Because the fluorocarbon material is relatively soft, it can be machined to the desired height by a burnish slider 20 without the shavings cut off by the burnish slider damaging the surface of the disk 17. The burnish slider 20 is supported by an arm 22 and a load spring 21 in a way entirely analogous to that shown in Figure 1 for the slider 14. The burnish slider 20 is very hard and has a number of transverse sharp edges on its ABS which act to cut the tops off projections as it encounters them. Figure 2 shows an unmachined asperity 15 on the surface of the disk 17 as it approaches the burnish slider 20. As each asperity 15 strikes the sharp edges of the burnished slider 20, a top portion 15b of the asperity 15 is detached and flies away, as is shown in a somewhat unrealistic manner in Figure 2. It is unlikely that the top portion 15b will be removed in a gradual manner as many very small particles, rather than in a single large particle.

At any rate, by controlling the height at which the burnish slider 20 flies above the surface of the disk 17, the height of the individual asperities 15a can be accurately controlled as well. The height at which the burnish slider 20 flies can also easily be measured by the technique explained in conjunction with Figure 1. Once a burnish slider 20 has been fabricated that flies at the desired height, it can be used to make a number of similar disks 17 for use, for example, in production. It should be noted that the height-to-width ratio of a machined asperity 15a is shown much exaggerated in Figure 2. In actuality, the width of an asperity 15a is about 10,000 to 30,000 times the height.

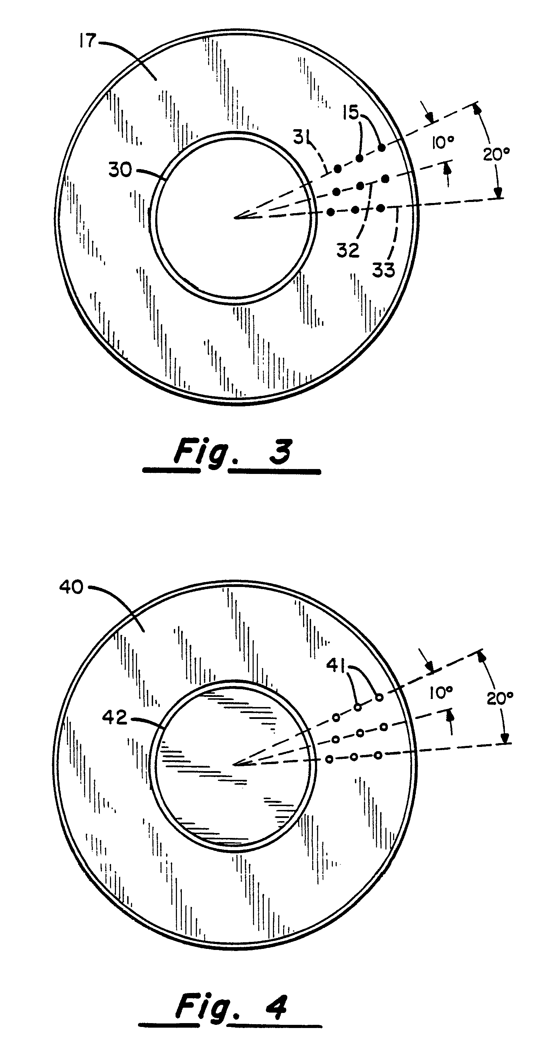

Figure 3 shows a preferred form of the disk 17 which has an outer radius of 115 mm (4.527 inch) and an inner hole 30 whose radius is 50 mm (1.969 inch). Nine asperities 15 are created from the fluorocarbon material on the disk 17. Each of the asperities 15 is located at one of the inter-sections formed by three radii 31, 32, 33 of the disk 17 with nine concentric circles on the surface of the disk. The two outer radii 31, 33 are at 10° angles with the centre radius 32. The nine concentric circles are spaced 5.08 mm (0.2 inch) apart, with the largest 12.7 mm (0.5 inch) from the edge of the disk 17. Obviously for disks of other sizes, these dimensions must be varied. Each concentric circle has a single asperity 15 on it, and each radius has three asperities. The asperities on the radius 33 at the inter-sections with the first, fourth and seventh concentric circles, starting the enumeration from the inside is arbitrary. The asperities 15 on the radius 32 are at the inter-sections with the second, fifth and eighth circles, and the asperities on the radius 31 are on the third, sixth and ninth circles. Depending on the particular application, it may be well to vary the number, size and position of the asperities.

A technique for forming the asperities which are to be machined to the proper height by the process described above will be described in conjunction with Figure 4. A masking disk 40 has nine holes 41 drilled in it to exactly correspond with the position of the asperities 15 described in connection with Figure 3. The disk 40 is made from flat 1.9 mm (0.075 inch) aluminium material with an inner hole radius 42 and its outer radius exactly the same as for the disk 17.

In the preferred process for forming the asperities 15, the masking disk 40 is used to shield the parts of the surface of the disk 17 which are not intended to receive the fluorocarbon material. The process includes the following steps, all of which should be performed in a clean room:

1. Clean both surfaces of the disk 17 with acetone using a lint free cloth.

2. Clean both surfaces of the disk 17 with ammonia using a lint free cloth.

3. Dry wipe both surfaces of the disk 17 with a lint free cloth.

4. Fly a burnish slider on both surfaces of the disk 17 to initially make them as smooth as possible, and select the better of the two surfaces to receive the asperities 15.

5. Carefully clean the masking disk 40.

6. Loosely over-lay the surface of the disk 17 which is to carry the asperities with the masking disk 40. It is necessary that the masking disk 40 is laid down in accurate initial alignment on the disk 17. Once laid down, it should not be shifted on the disk 17, since this can lead to scratching the latter. To prevent his problem, if the test disk 17 is made of transparent glass, the masking disk 40 can be alternatively mounted beneath the test disk 17, and used strictly as a positioning guide for the asperities. If placed beneath it, the masking disk 40 will not shield the operational surface of the disk 17.

7. Prepare a solution of DuPont 954-201 Green Teflon-S (trade mark) having a particle size of less than 0.025 micron (1 micro-inch) in acetone at a concentration of one to five drops per 20 ml of acetone, where twenty four drops equals approximately 1 ml. This material is described in brochure E-33980, Rev. 2 of the DuPont Company, F & F Department, Wilmington, Delaware 19898, United States of America.

8. Using a hypodermic syringe with a 0.179 mm (0.007 inch) or smaller inside diameter needle, in succession make nine as small drops as possible at the needle's tip, and place each drop on the disk 17 at the centre of each hole 41 in the masking disk 40. If the masking disk is placed on top of the test disk 17, the solution must not make contact with the edge of any hole 41. If the solution wicks into the space between the disks, the process should be re-started.

9. Dry the drops for at least one hour.

10. Place the disk assembly in a cool oven and bake at 205°C (400°F) for three hours, turn off the oven, and cool to room temperature.

After the disk 17 has been prepared with asperities 15, it can be processed with the burnish slider 20 as explained in connection with Figure 2. It can then be used in the manner explained for Figure 1. This process inexpensively and reliably produces a disk 17 having asperities with accurately controlled heights which do not damage the slider 14 under test should they touch during operation.

It is also possible to control the height of an asperity 15 by controlling the concentration of the fluorocarbon resin in the acetone solution. One drop of fluorocarbon resin in 20 ml of acetone will produce an asperity of around 0.4 to 0.5 micron (15 to 20 micro-inch) in the unmachined state. Five drops will produce a height proportionately higher. There is some experimentation that may be needed to control the height. However, such heights greater than around 0.4 micron (15 micro-inch) are not usually needed because of the preferred flying heights for the slider 14 are in the range of 0.25 to 0.4 micron (10 to 15 micro-inch). It is also possible to create an asperity with greater heights by putting additional drops of fluorocarbon resin solution in the individual holes 41 after each previous drop has dried. It should be noted that because of the actual height-to-width ratio of an asperity 15 in finalised shape, it may not be necessary to machine the asperity to achieve an acceptable edge for it. Accordingly, it is preferred where possible to control the height by proper choice of fluorocarbon resin-acetone concentration.

## Claims

1. A rigid transparent disk (17) for use in testing the mechanical response characteristics of a slider (14) carrying a transducer in a magnetic disk drive, said disk being characterised by having projections (15a) thereon formed of a fluorocarbon material and having a pre-selected footprint shape and size and a pre-selected projecting height above the surrounding surface of the disk (17).

2. A disk as claimed in claim 1 characterised in that the pre-selected projection height is approximately 0.1 to 0.3 micron (4 to 12 micro-inch) above the surrounding surface of the disk (17).

3. A disk as claimed in claim 1 characterised in that the pre-selected projection height is at least 0.1 micron (4 micro-inch) above the surrounding surface of the disk.

4. A disk as claimed in any preceding claim characterised in that the disk (17) is made of glass.

5. A disk as claimed in any preceding claim characterised in that the fluorocarbon material is a fluorocarbon resin with modifiers.

6. A method of forming a disk as claimed in any preceding claim characterised by comprising the steps of: placing a pre-selected quantity of a liquid in which is dissolved a fluorocarbon material on a pre-selected area of the surface of the disk; allowing the liquid solution of fluorocarbon material to dry; and baking the disk and the fluorocarbon material which is on it in an oven.

7. A method as claimed in claim 6 characterised by including the step of over-laying at least a portion of the surface of the disk (17) with a flat plate (40) having at least one hole (41) passing therethrough and applying the fluorocarbon material to a portion of the surface of the disk (17) surrounded by the hole or holes thereby to form a projection(s).

8. A method as claimed in claim 7 characterised by including the step of removing the flat plate (40) from the disk, and thereafter removing a portion of the top of the projection(s) (15a).

9. A method as claimed in claim 8 characterised in that the step of removing a portion of the top of the projection(s) (15a) includes removing at least approximately all but the bottom 0.3 microns (12 micro-inches) thereof.

10. A method as claimed in claim 8 or 9 characterised in that the step of removing a portion of the top of the projection(s) (15a) includes mounting the disk (17) on a spindle (16) and rotating the disk, and flying across the projection a burnish slider (20) having a pre-determined flying height above the disk.

11. A method as claimed in any of claims 6 to 10 characterised in that the fluorocarbon material in the liquid solution has a particle size not greater than 0.025 micron (1 micro-inch).

EP 0 359 364 A2

Fig. 1

Fig. 2

_**Fig. 3**_

_**Fig. 4**_